# EUROPEAN PATENT SPECIFICATION

(11) **EP 2 157 807 B1**
(45) Date of publication and mention of the grant of the patent: **01.07.2015**
(21) Application number: 08706402.8
(22) Date of filing: 22.01.2008
(51) Int. Cl.: H04W 76/04

(54) **METHOD OF NETWORK CONTROLLER REPORTING ON THE CYCLE PERIOD ABILITY OF THE MAXIMAL DISCONTINUOUS TRANSMISSION IN A CELL**
VERFAHREN ZUM MELDEN DER ZYKLUSPERIODENFÄHIGKEIT DER MAXIMALEN DISKONTINUIERLICHEN ÜBERTRAGUNG IN EINER ZELLE DURCH EINE NETZSTEUERUNG
PROCÉDÉ D'UNE UNITÉ DE COMMANDE DE RÉSEAU SE RAPPORTANT À LA CAPACITÉ D'UNE PÉRIODE DE CYCLE DE LA TRANSMISSION DISCONTINUE MAXIMALE DANS UNE CELLULE

(30) Priority: 01.06.2007 CN 200710107397
(43) Date of publication of application: 24.02.2010
(73) Proprietor: ZTE Corporation, Shenzhen, Guangdong 518057 (CN)
(72) Inventor: KE, Yazhu, Guangdong 518057 (CN); CHENG, Xiang, Guangdong 518057 (CN)
(74) Representative: Ahner, Philippe
(86) International application number: PCT/CN2008/000158
(87) International publication number: WO 2008/144999

(56) References cited:
- WO-A1-02/067609
- CN-A- 1 713 747
- CN-A- 1 870 814
- KR-A- 20050 020 058
- US-A1- 2005 207 359
- "3rd Generation Partnership Project; Technical Specification Group Radio Access Network; UTRAN Iur interface RNSAP signalling (Release 7)", 3GPP STANDARD; 3GPP TS 25.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.4.0, 1 March 2007 (2007-03-01), pages 1-788, XP050368547,
- QUALCOMM EUROPE ET AL: "Max UE DTX Cycle Signaling Support for CPC operation", 3GPP DRAFT; R3-071143, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Kobe, Japan; 20070514, 14 May 2007 (2007-05-14), XP050162010, [retrieved on 2007-05-14]
- ZTE: "Max UE DTX Cycle Signaling Support for CPC operation", 3GPP DRAFT; R3-071419 MAX UE DTX CYCLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162249, [retrieved on 2007-08-15]

## Description

### Invention Field

The present invention relates to the communication field, in particular to a method for network controller reporting the cycle period ability of the maximal discontinuous transmission in a cell.

### Invention Background

The Access Network includes one or more radio network sub-systems. Each radio network sub-system is a sub-network of the Access Network and includes one Radio Network Controller ( RNC ) and one or more Node B. The RNC is the network element which is responsible for controlling the radio resources of the Access Network. The major functions of Node B are to perform the process of the air interface physical layer, and perform certain basic radio resource management operation. When User Equipment ( UE ) establishes communication relationship with a plurality of the RNC, the different RNCs are connected with each other via Iur port, the RNC in charge of connection between the UE and Core Network(CN) is referred as Serving Radio Network Controller (SRNC), and the RNC which is responsible for signaling and data transmitting of the UE but not for communication with the CN is referred as Drift Radio Network Controller (DRNC); the DRNC also is responsible for transmitting the supporting ability of the cell subordinate to the Node B under the management of the DRNC to the SRNC.

High Speed Packet Access system allows a UE to occupy at dedicated status for a comparatively long time in order to avoid changing to cell common status due to not transmitting data for a comparatively short time, and thus save power resource and system load of the UE when it occupies dedicated status. 3GPP R7 protocol introduces one continuous packet connection technology: discontinuous transmission and discontinuous receiving, technologically characterized in that, when there is no data to be sent on the uplink of the UE or there is no control information to be sent on HS-DPCCH, the transmitter will be switched off; when there is data to be sent on the uplink of the UE or there is control information to be sent on HS-DPCCH, the transmitter will be switched on; which will save the power resource and system load of the UE; at the same time, base station switches off F-DPCH transmission during the interval in which the UE switches off the receiver, thus avoiding resource waste.

The base station provides various supporting ability to the maximal discontinuous transmission cycle period length of the UE, so as to ensure that both the UE and the base station can take suitable discontinuous transmission cycle periods, the SRNC needs to acquire the supporting ability of discontinuous transmission period length of relative cells from the DRNC. However, in current protocols, there is no channel for DRNC reporting the supporting ability of maximal discontinuous transmission cycle period length of relating cells.

Thus, in order to compensate the limitation of protocol, the present invention provides the method for network controller reporting cell cycle period ability. "3rd Generation Partnership Project; Technical Specification Group Radio Access Network; UTRAN Iur interface RNSAP signalling (Release 7)" 3GPP STANDARD; 3GPP TS 25.423 and QUALCOMM EUROPE ET AL: "Max UE DTX Cycle Signaling Support for CPC operation", 3GPP DRAFT; R3-071143 provide respective technical solutions; however, the above mentioned problem still remains unsolved.

### Summary of the Invention

Aimed to one or more of above problems, the present invention provides a method for network controller reporting cycle period ability of the maximal discontinuous transmission in a cell, which solves the problem that in current protocol, there is no channel for DRNC reporting the supporting ability of maximal discontinuous transmission cycle period length of relating cells, resulting in that the UE and the Base Station can not take suitable discontinuous transmission cycle period.

According to the present invention, the method for network controller reporting a cycle period ability of a maximal discontinuous transmission in a cell comprises: a DRNC receives a request message of a SRNC, then DRNC sends supporting ability information of a cycle period length of the maximal discontinuous transmission of a relating cell to the SRNC by signaling.

In which, the request message comprises anyone of the following: radio link setup request message and radio link addition request message. The signaling comprises anyone of the following: radio link setup response message, radio link setup failure message, radio link addition response message and radio addition failure message, or the combinations thereof.

When the SRNC sends a radio link setup request message to the DRNC, the DRNC makes the radio link setup response message or radio link setup failure message carry supporting ability information; and when the SRNC sends a radio link addition request message to the DRNC, the DRNC makes the radio link addition response message or radio link addition failure message carry supporting ability information of the maximal discontinuous transmission cycle period.

The way of the signaling reporting can be carried out by adding the ability cell of the maximal discontinuous transmission cycle period of UE to represent the supporting ability of the maximal discontinuous transmission cycle period length of the relating cells. The fetch values of the ability cell of the maximal discontinuous transmission cycle period of the UE are 5, 10, 20, 40, 64, 80, 128, 160 , ... , the unit is sub-frame, if one of which is chosen, the cycle period length of discontinuous transmission less than that value is supported.

Signaling reporting can be carried out by adding the supporting indication of the maximal discontinuous transmission cycle period of UE to the cell ability container fetch values of the existing cell. The representation method of supporting indication of the maximal discontinuous transmission cycle period of UE are as follows: supporting ability for the maximal discontinuous transmission cycle period of UE being 10 and less than 10, supporting ability for the maximal discontinuous transmission cycle period of UE being 20 and less than 20, supporting ability for the maximal discontinuous transmission cycle period of UE being 40 and less than 40, supporting ability for the maximal discontinuous transmission cycle period of UE being 64 and less than 64, supporting ability for the maximal discontinuous transmission cycle period of UE being 80 and less than 80, supporting ability for the maximal discontinuous transmission cycle period of UE being 128 and less than 128, supporting ability for the maximal discontinuous transmission cycle period of UE being 160 and less than 160; each above supporting ability is indicated via bit, wherein 0 denoting non-supporting, and 1 denoting supporting. The relating cells comprise one or more adjacent cells of the cell in which the DRNC and the UE have established a link.

When the DRNC receives a radio link setup request message or radio link addition request message, and the one or more links that need to be established or added have been successfully established or added, the radio link successfully setup response message or radio link successfully addition response message feedback by the Drift Radio Network Controller carries the supporting ability information of the maximal discontinuous transmission cycle period of the adjacent cell with the successfully established link or the successfully added link.

When the DRNC receives a radio link setup request message or radio link addition request message, and part of the plurality of links that need to be established or added have been successfully established or added, the radio link setup failure response message or radio link addition failure response message feedback by the DRNC carries the supporting ability information of the maximal discontinuous transmission cycle period of the adjacent cell with the successfully established link or the successfully added link.

Based on above discussion, the present invention provides the way of the SRNC acquiring the maximal discontinuous transmission cycle period length of the relating cell from the DRNC, so as to the SRNC determines whether the UE takes a suitable discontinuous transmission cycle period based on thus acquired information.

### A Brief Description of the Drawings

The illustrated drawings herein provide a further understanding to the present invention and form a part of the application. The exemplary embodiments and the description thereof are intended to explain the present invention not limit the proper scope of the present invention, wherein:
Fig.1 is the flow chart of the method for the network controller reporting the cycle period ability in a cell according to the present invention;
Fig.2 is the flow chart of the method for the network controller reporting the cycle period ability in a cell according to one embodiment of the present invention; and
Fig.3 is the flow chart of the method for the network controller reporting the cycle period ability in a cell according to another embodiment of the present invention.

### Detailed Description of Embodiments

The detailed description of the embodiment of the present invention will be provided in connection the drawings.

The present invention is provided so as to the SRNC determines whether the UE takes a suitable discontinuous transmission cycle period based on thus acquired information by the method for the DRNC reporting the maximal discontinuous transmission cycle period length of the relating cell to the SRNC. The present invention is realized by the way that the DRNC makes the radio link setup response message or the radio link addition response message carry the supporting ability information of the maximal discontinuous transmission cycle period of the adjacent cell.

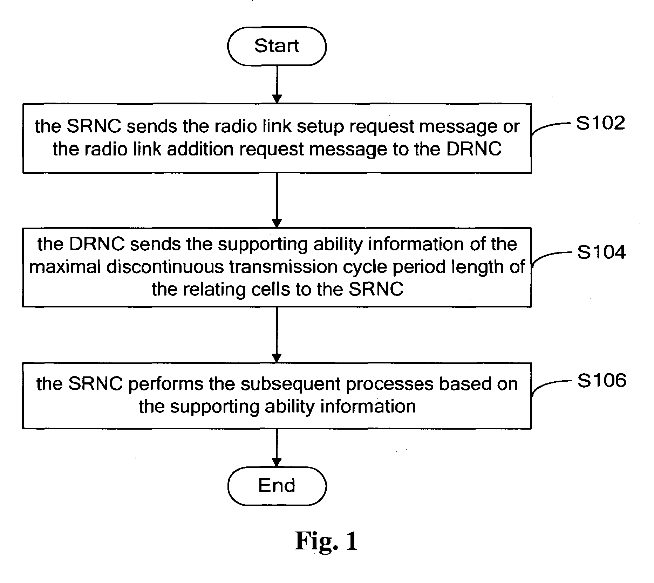

Fig.1 is the flow chart of the method for the network controller reporting the cycle period ability in a cell according to the present invention. As shown in Fig.1, the method comprises the following steps:
Step S102, the SRNC sends request message to the DRNC.
Step S104, the DRNC reports the cycle period length indication information of the maximal discontinuous transmission supported by the relating cell to the SRNC by signaling.
Step S106, the SRNC performs subsequent process based on the supporting ability information.

Further, the signaling mentioned in Step S102 can be anyone of the following:
Radio link setup response message, triggered by radio link setup request message;
Radio link addition response message, triggered by radio link addition request message;
Radio link setup failure message, triggered by radio link setup request message;
Radio link addition failure message, triggered by radio link addition request message.

Further, the above-said relating cell is the adjacent cell of the cell in which a link has been established between the DRNC and the UE, the number of the adjacent cell can be one or more.

Further, when the DRNC receives a radio link setup request message or a radio link addition request message, and the one or more links that need to be established or added have been successfully established or added, the radio link successfully setup response message or radio link successfully addition response message carries the information of the adjacent cell with the successfully established link or the successfully added link.

Further, when the DRNC receives a radio link setup request message or a radio link addition request message, in which the plurality of links need to be established or added, and part of the plurality of links have been successfully established or added, part of the plurality of links have been unsuccessfully established or added, the radio link setup failure message or radio link addition failure message carries the information of the adjacent cell with the successfully established link or the successfully added link.

Further, the representation method of the ability information of the maximal discontinuous transmission cycle period length supported by a cell can be anyone of the following:
Adding one cell, the fetch value of the cell can be enumerated among (5, 10, 20, 40, 64, 80, 128, 160, ...), the unit is sub-frames. The indication of the cycle period of the maximal discontinuous transmission of the UE is bound to the adjacent cell. Further, if one value is fetched, then the cycle period length of discontinuous transmission less than that value will also be supported.

Or, adding the ability information of the maximal discontinuous transmission cycle period length supported by the cell in the "cell ability container" of the existing cell, for example, supporting ability for the maximal discontinuous transmission cycle period of UE being 10 and less than 10, supporting ability for the maximal discontinuous transmission cycle period of UE being 20 and less than 20, supporting ability for the maximal discontinuous transmission cycle period of UE being 40 and less than 40, supporting ability for the maximal discontinuous transmission cycle period of UE being 64 and less than 64, supporting ability for the maximal discontinuous transmission cycle period of UE being 80 and less than 80, supporting ability for the maximal discontinuous transmission cycle period of UE being 128 and less than 128, supporting ability for the maximal discontinuous transmission cycle period of UE being 160 and less than 160.

Each above said supporting ability is indicated via bit, wherein 0 denoting non-supporting, and 1 denoting supporting.

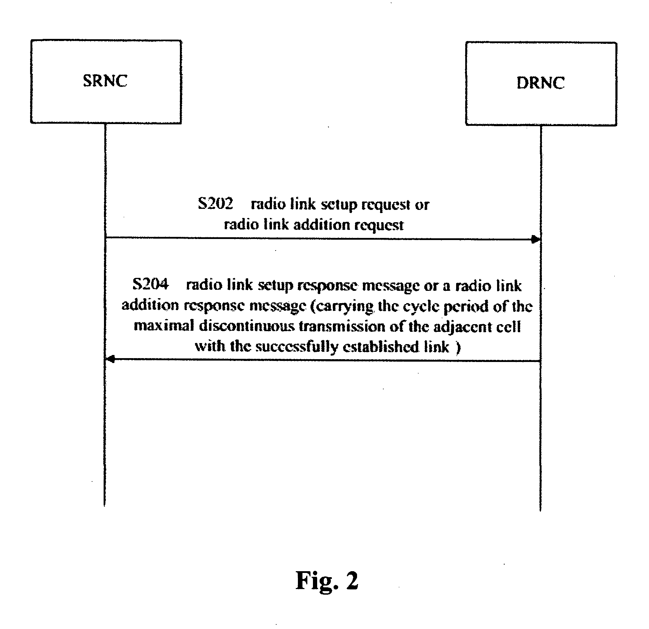

Fig.2 is the flow chart of the method for the network controller reporting the cycle period ability in a cell according to one embodiment of the present invention. As shown in Fig.2, through successfully establishing or adding link in the present invention, the method for the DRNC reporting the supporting ability of the maximal discontinuous transmission cycle period of the relating cell comprises:
Step S202, the SRNC sends a radio link setup request message or a radio link addition request message to the DRNC.
Step S204, when the DRNC has successfully established or added all the links that need to be established or added, the DRNC sends a radio link setup response message or a radio link addition response message to the SRNC. The radio link setup response message or the radio link addition response message carries the cycle period of the maximal discontinuous transmission supported by the adjacent cell with the successfully established link.

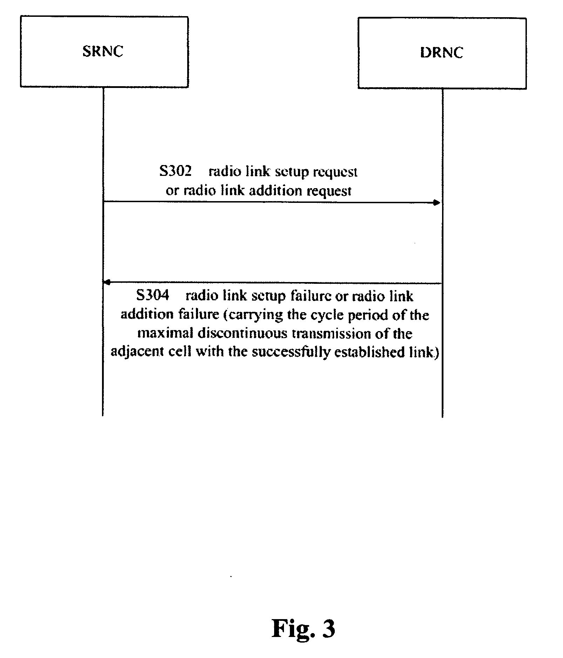

Fig.3 is the flow chart of the method for the network controller reporting the cycle period ability in a cell according to another embodiment of the present invention. As shown in Fig.3, in the present invention, the method for the DRNC with unsuccessfully establishing or adding link reporting the supporting ability of downlink high order modulation of the cell under the control of it comprises:
Step S306, the SRNC sends a radio link setup request message or a radio link addition request message to the DRNC.
Step S308, when the DRNC has successfully established or added part of the links that need to be established or added, the DRNC sends a radio link setup failure message or a radio link addition failure message to the SRNC. The radio link setup failure message or the radio link addition failure message carries the cycle period of the maximal discontinuous transmission supported by the adjacent cell with the successfully established link.

Based on above discussion, the present invention provides the way of the SRNC acquiring the maximal discontinuous transmission cycle period length of the relating cell from the DRNC, so as to the SRNC determines whether the UE takes a suitable discontinuous transmission cycle period based on thus acquired information.

## Claims

1. A method for network controller reporting a cycle period ability of a maximal discontinuous transmission in a cell, **characterized in that**,
after a Drift Radio Network Controller, DRNC, receiving a request message from a Serving Radio Network Controller, SRNC, the DRNC sends supporting ability information of a cycle period length of the maximal discontinuous transmission of a relating cell to the SRNC by signaling.

2. The method for network controller reporting the cycle period ability of the maximal discontinuous transmission in a cell according to Claim 1, **characterized in that**, the request message comprises anyone of the following: radio link setup request message and radio link addition request message.

3. The method for network controller reporting the cycle period ability of the maximal discontinuous transmission in a cell according to Claim 2, **characterized in that**, the signaling comprises anyone of the following: radio link setup response message, radio link setup failure message, radio link addition response message and radio link addition failure message, or combinations thereof.

4. The method for network controller reporting the cycle period ability of the maximal discontinuous transmission in a cell according to Claim 3, **characterized in that**,
when the SRNC sends a radio link setup request message to the DRNC, the DRNC makes the radio link setup response message or radio link setup failure message carry supporting ability information; and
when the SRNC sends a radio link addition request message to the DRNC, the DRNC makes the radio link addition response message or radio link addition failure message carry supporting ability information of the maximal discontinuous transmission cycle period.

5. The method for network controller reporting the cycle period ability of the maximal discontinuous transmission in a cell according to Claim 4, **characterized in that,** the way of the signaling reporting can be carried out by adding a ability cell of the maximal discontinuous transmission cycle period of User Equipment, UE, wherein the ability cell represents the supporting ability of the maximal discontinuous transmission cycle period length of the relating cells.

6. The method for network controller reporting the cycle period ability of the maximal discontinuous transmission in a cell according to Claim 5, **characterized in that**, fetch values of the ability cell of the maximal discontinuous transmission cycle period of the UE are 5, 10, 20, 40, 64, 80, 128, 160, the unit of the fetch values is sub-frames, if one of which is chosen, a cycle period length of discontinuous transmission less than that value is supported.

7. The method for network controller reporting the cycle period ability of the maximal discontinuous transmission in a cell according to Claim 4, **characterized in that,** the way of the signaling reporting can be carried out by adding the supporting indication of the maximal discontinuous transmission cycle period of UE from a cell ability container fetch values of an existing cell.

8. The method for network controller reporting the cycle period ability of the maximal discontinuous transmission in a cell according to Claim 7, **characterized in that**, a representation method of the supporting indication of the maximal discontinuous transmission cycle period of UE is as follows: supporting ability for the maximal discontinuous transmission cycle period of UE being 10 and less than 10, supporting ability for the maximal discontinuous transmission cycle period of UE being 20 and less than 20, supporting ability for the maximal discontinuous transmission cycle period of UE being 40 and less than 40, supporting ability for the maximal discontinuous transmission cycle period of UE being 64 and less than 64, supporting ability for the maximal discontinuous transmission cycle period of UE being 80 and less than 80, supporting ability for the maximal discontinuous transmission cycle period of UE being 128 and less than 128, supporting ability for the maximal discontinuous transmission cycle period of UE being 160 and less than 160; each above supporting ability is indicated via bit, wherein 0 denoting non-supporting, and 1 denoting supporting.

9. The method for network controller reporting the cycle period ability of the maximal discontinuous transmission in a cell according to anyone of Claims 1-8, **characterized in that**, the relating cells comprise one or more adjacent cells of the cell in which the DRNC and the UE have established a link.

10. The method for network controller reporting the cycle period ability of the maximal discontinuous transmission in a cell according to Claim 3, **characterized in that**, when the DRNC receives a radio link setup request message or radio link addition request message, and one or more links that need to be established or added have been successfully established or added, the radio link successfully setup response message or radio link successfully addition response message feedback by the DRNC carries the supporting ability information of the maximal discontinuous transmission cycle period of the adjacent cell with the successfully established link or the successfully added link.

11. The method for network controller reporting the cycle period ability of the maximal discontinuous transmission in a cell according to Claim 3, **characterized in that**, when the DRNC receives the radio link setup request message or the radio link addition request message, and part of the plurality of links that need to be established or added have been successfully established or added, the radio link setup failure message or radio link addition failure message feedback by the DRNC carries the supporting ability information of the maximal discontinuous transmission cycle period of the adjacent cell with the successfully established link or the successfully added link.

## Patentansprüche

1. Verfahren zum Melden der Zyklusperiodenfähigkeit der maximalen diskontinuierlichen Übertragung in einer Zelle, **dadurch gekennzeichnet, daß** nachdem ein Drift Radio Network Controller, DRNC, wenn er eine Aufforderungsnachricht von einem Serving Radio Network Controller, SRNC, erhält, der DRNC eine stützende Befähigungsinformation einer Zyklusperiodenlänge der maximalen diskontinuierlichen Übertragung einer betreffenden Zelle durch Signalgebung an den SRNC sendet.

2. Verfahren zum Melden der Zyklusperiodenfähigkeit der maximalen diskontinuierlichen Übertragung in einer Zelle nach Anspruch 1, **dadurch gekennzeichnet, daß** die Anforderungsnachricht irgendeine der folgenden Nachrichten betrifft: Funkverbindungsaufbau-Anforderungsnachricht und Funkverbindungs-Zusatz-Anforderungsnachricht.

3. Verfahren zum Melden der Zyklusperiodenfähigkeit der maximalen diskontinuierlichen Übertragung in einer Zelle nach Anspruch 2, **dadurch gekennzeichnet, daß** die Signalgebung irgendeine der folgenden Nachrichten umfaßt: Funkverbindungs-Aufbauantwortnachricht, Funkverbindungs-Aufbaufehlernachricht, Funkverbindungs-Zusatzantwortnachricht und Funkverbindungs-Zusatzfehlernachricht oder deren Kombinationen.

4. Verfahren zum Melden der Zyklusperiodenfähigkeit der maximalen diskontinuierlichen Übertragung in einer Zelle nach Anspruch 3, **dadurch gekennzeichnet, daß** dann, wenn der SRNC eine Funkverbindungs-Aufbauaufforderungsnachricht an den DRNC sendet, der DRNC veranlaßt, daß die Funkverbindungs-Aufbauantwortnachricht oder die Funkverbindungs-Aufbaufehlernachricht Informationen über unterstützende Fähigkeiten beinhalten; und wenn der SRNC eine Funkverbindungs-Zusatzaufforderungsnachricht an den DRNC sendet, der DRNC veranlaßt, daß die Funkverbindungs-Aufbauzusatzantwortnachricht oder die Funkverbindungs-Zusatzfehlernachricht zusätzliche Informationen über die maximale diskontinuierliche Übertragungszyklusperiode beinhalten.

5. Verfahren zum Melden der Zyklusperiodenfähigkeit der maximalen diskontinuierlichen Übertragung in einer Zelle nach Anspruch 4, **dadurch gekennzeichnet, daß** die Art und Weise des Signalgebungsberichtes dadurch ausgeführt werden kann, daß eine geeignete Zelle des maximalen, diskontinuierlichen Übertragungszyklusperiode des User Equipments, UE, hinzugefügt werden kann, wobei die Bewegungszelle die Unterstützungsfähigkeit der maximalen, diskontinuierlichen Übertragungszyklus-Periodenlänge der entsprechenden Zellen darstellt.

6. Verfahren zum Melden der Zyklusperiodenfähigkeit der maximalen diskontinuierlichen Übertragung in einer Zelle nach Anspruch 5, **dadurch gekennzeichnet, daß** Abrufwerte der Befähigungszelle der maximalen diskontinuierlichen Übertragungszellenperiode der UE 5, 10, 20, 40, 64, 80, 128, 160 sind, wobei die Einheit der Abrufwerte in Teilrahmen, falls einer von ihnen gewählt wird, eine Zyklusperiodenlänge der diskontinuierlichen Übertragung kleiner als der vorhergehene Wert ist.

7. Verfahren zum Melden der Zyklusperiodenfähigkeit der maximalen diskontinuierlichen Übertragung in einer Zelle nach Anspruch 4, **dadurch gekennzeichnet, daß** die Art und Weise der Signalgebungsberichte durch Hinzufügen der Trägerangabe der maximalen, diskontinuierlichen Übertragungszyklusperiode des UE von Abrufwerten einer existierenden Zelle aus vorhandenen Zellen durchgeführt werden kann.

8. Verfahren zum Melden der Zyklusperiodenfähigkeit der maximalen diskontinuierlichen Übertragung in einer Zelle nach Anspruch 7, **dadurch gekennzeichnet, daß** ein Darstellungsverfahren der Unterstützungsanordnungsanzeige der maximalen, diskontinuierlichen Übertragungszyklusperiode des UE die folgende ist: Unterstützende Fähigkeit für die maximale, diskontinuierliche Übertragungszyklusperiode des UE, die 10 und weniger als 10 ist, die unterstützende Fähigkeit für die maximale, diskontinuierliche Übertragungszyklusperiode des UE, die 20 und weniger als 20 ist, unterstützende Fähigkeit für die maximale, diskontinuierliche Übertragungszyklusperiode des UE, die 40 und weniger als 40 ist, unterstützende Fähigkeit für die maximale, diskontinuierliche Übertragungszyklusperiode des UE, die 64 und weniger als 64 ist, unterstützende Fähigkeit für die maximale, diskontinuierliche Übertragungszyklusperiode des UE, die 80 und weniger als 80 ist, unterstützende Fähigkeit für die maximale, diskontinuierliche Übertragungszyklusperiode des UE, die 128 und weniger als 128 ist, unterstützende Fähigkeit für die maximale, diskontinuierliche Übertragungszyklusperiode des UE, die 160 und weniger als 160 ist; jede der obigen unterstützenden Fähigkeiten wird durch Bit mitangezeigt, wobei 0 nicht unterstützend bedeutet und 1 unterstützend bedeutet.

9. Verfahren zum Melden der Zyklusperiodenfähigkeit der maximalen diskontinuierlichen Übertragung in einer Zelle nach irgendeinem der Ansprüche 1 bis 8, **dadurch gekennzeichnet, daß** die diesbezüglichen Zellen eine oder mehrere benachbarte Zellen sind, in der der DRNC und das UE eine Verbindung hergestellt haben.

10. Verfahren zum Melden der Zyklusperiodenfähigkeit der maximalen diskontinuierlichen Übertragung in einer Zelle nach Anspruch 3, **dadurch gekennzeichnet, daß** dann, wenn der DRNC eine Funkverbindungsaufbau-Aufforderungsnachricht oder eine Funkverbindungszusatz-Aufforderungsnachricht empfängt und eine oder mehrere Verbindungen, die aufgebaut oder hinzugefügt werden müssen, erfolgreich aufgebaut oder hinzugefügt worden sind, die Funkverbindungs-Antwortnachricht über den erfolgreichen Aufbau oder die Funkverbindungs-Antwortnachricht über das erfolgreiche zusätzliche Feedback durch das DRNC tragende Bestandteile der sie unterstützenden Fähigkeits-Information der maximalen, diskontinuierlichen Übertragungszyklusperiode der benachbarten Stellen bei der erfolgreich errichteten Verbindung oder erfolgreich hinzugefügten Verbindung sind.

11. Verfahren zum Melden der Zyklusperiodenfähigkeit der maximalen diskontinuierlichen Übertragung in einer Zelle nach Anspruch 3, **dadurch gekennzeichnet, daß** dann, wenn das DRNC die Funkverbindungsaufbau-Aufforderungsnachricht oder die Funkverbindungszusatz-Aufforderungsnachricht empfängt, ein Teil der vielen Verbindungen, die errichtet oder hinzugefügt werden müssen, erfolgreich errichtet oder hinzugefügt worden sind, die Rückmeldung über die Funkverbindungs-Aufbaufehlernachricht oder die Funkverbindungs-Zusatzfehlernachricht durch das DRNC, die unterstützende Fähigkeit zur Information der maximalen, diskontinuierlichen Übertragungszyklusperiode der benachbarten Zelle mit der erfolgreich errichteten Verbindung oder der erfolgreich hinzugefügten Verbindung trägt.

## Revendications

1. Procédé pour un contrôleur de réseau rapportant une capacité de période de cycle d'une transmission discontinue maximale dans une cellule, **caractérisé en ce que**,
après qu'un Contrôleur de réseau radio de dérive, DRNC, reçoit un message de demande en provenance d'un Contrôleur de réseau radio de desserte, SRNC, le DRNC envoie des informations de capacité de support d'une longueur de période de cycle de la transmission discontinue maximale d'une cellule relative, au SRNC par signalisation.

2. Procédé pour un contrôleur de réseau rapportant la capacité de période de cycle de la transmission discontinue maximale dans une cellule selon la revendication 1, **caractérisé en ce que** le message de demande comprend l'un quelconque de ce qui suit : un message de demande d'établissement de liaison radio et un message de demande d'ajout de liaison radio.

3. Procédé pour un contrôleur de réseau rapportant la capacité de période de cycle de la transmission discontinue maximale dans une cellule selon la revendication 2, **caractérisé en ce que** la signalisation comprend l'un quelconque de ce qui suit : un message de réponse d'établissement de liaison radio, un message d'échec d'établissement de liaison radio, un message de réponse d'ajout de liaison radio et un message d'échec d'ajout de liaison radio, ou des combinaisons de ceux-ci.

4. Procédé pour un contrôleur de réseau rapportant la capacité de période de cycle de la transmission discontinue maximale dans une cellule selon la revendication 3, **caractérisé en ce que**,
lorsque le SRNC envoie un message de demande d'établissement de liaison radio au DRNC, le DRNC amène le message de réponse d'établissement de liaison radio ou le message d'échec d'établissement de liaison radio à acheminer des informations de capacité de support ; et
lorsque le SRNC envoie un message de demande d'ajout de liaison radio au DRNC, le DRNC amène le message de réponse d'ajout de liaison radio ou le message d'échec d'ajout de liaison radio à acheminer des informations de capacité de support de la période de cycle de transmission discontinue maximale.

5. Procédé pour un contrôleur de réseau rapportant la capacité de période de cycle de la transmission discontinue maximale dans une cellule selon la revendication 4, **caractérisé en ce que** la façon dont le rapport de signalisation peut être effectué est en ajoutant une cellule de capacité de la période de cycle de transmission discontinue maximale d'équipement d'utilisateur, UE, où la cellule de capacité représente la capacité de support de la longueur de période de cycle de transmission discontinue maximale des cellules relatives.

6. Procédé pour un contrôleur de réseau rapportant la capacité de période de cycle de la transmission discontinue maximale dans une cellule selon la revendication 5, **caractérisé en ce que** des valeurs d'extraction de la cellule de capacité de la période de cycle de transmission discontinue maximale de l'UE sont 5, 10, 20, 40, 64, 80, 128, 160, l'unité des valeurs d'extraction est sous-trames, si l'une d'elles est choisie, une longueur de période de cycle de transmission discontinue inférieure à cette valeur est supportée.

7. Procédé pour un contrôleur de réseau rapportant la capacité de période de cycle de la transmission discontinue maximale dans une cellule selon la revendication 4, **caractérisé en ce que** la façon dont le rapport de signalisation peut être effectué est en ajoutant l'indication de support de la période de cycle de transmission discontinue maximale d'UE à partir d'une valeur d'extraction de conteneur de capacité de cellule d'une cellule existante.

8. Procédé pour un contrôleur de réseau rapportant la capacité de période de cycle de la transmission discontinue maximale dans une cellule selon la revendication 7, **caractérisé en ce que** un procédé de représentation de l'indication de support de la période de cycle de transmission discontinue maximale d'UE est comme suit : capacité de support pour la période de cycle de transmission discontinue maximale d'UE étant 10 et moins de 10, capacité de support pour la période de cycle de transmission discontinue maximale d'UE étant 20 et moins de 20, capacité de support pour la période de cycle de transmission discontinue maximale d'UE étant 40 et moins de 40, capacité de support pour la période de cycle de transmission discontinue maximale d'UE étant 64 et moins de 64, capacité de support pour la période de cycle de transmission discontinue maximale d'UE étant 80 et moins de 80, capacité de support pour la période de cycle de transmission discontinue maximale d'UE étant 128 et moins de 128, capacité de support pour la période de cycle de transmission discontinue maximale d'UE étant 160 et moins de 160 ; chaque capacité de support ci-dessus est indiquée par bit, où 0 désigne non-support, et 1 désigne support.

9. Procédé pour un contrôleur de réseau rapportant la capacité de période de cycle de la transmission discontinue maximale dans une cellule selon l'une quelconque des revendications 1 à 8, **caractérisé en ce que** les cellules relatives comprennent une ou plusieurs cellules adjacentes de la cellule dans laquelle le DRNC et l'UE ont établi une liaison.

10. Procédé pour un contrôleur de réseau rapportant la capacité de période de cycle de la transmission discontinue maximale dans une cellule selon la revendication 3, **caractérisé en ce que**, lorsque le DRNC reçoit un message de demande d'établissement de liaison radio ou un message de demande d'ajout de liaison radio, et qu'une ou plusieurs liaisons qui ont besoin d'être établies ou ajoutées ont été établies ou ajoutées avec succès, la rétroaction de message de réponse d'établissement avec succès de liaison radio ou de message de réponse d'ajout avec succès de liaison radio par le DRNC achemine les informations de capacité de support de la période de cycle de transmission discontinue maximale de la cellule adjacente avec la liaison établie avec succès ou la liaison ajoutée avec succès.

11. Procédé pour un contrôleur de réseau rapportant la capacité de période de cycle de la transmission discontinue maximale dans une cellule selon la revendication 3, **caractérisé en ce que**, lorsque le DRNC reçoit le message de demande d'établissement de liaison radio ou le message de demande d'ajout de liaison radio, et qu'une partie de la pluralité de liaisons qui ont besoin d'être établies ou ajoutées ont été établies ou ajoutées avec succès, la rétroaction de message d'échec d'établissement de liaison radio ou de message d'échec d'ajout de liaison radio par le DRNC achemine les informations de capacité de support de la période de cycle de transmission discontinue maximale de la cellule adjacente avec la liaison établie avec succès ou la liaison ajoutée avec succès.
